# EUROPEAN PATENT SPECIFICATION

(11) **EP 1 678 034 B1**
(45) Date of publication and mention of the grant of the patent: **07.03.2007**
(21) Application number: 04791097.1
(22) Date of filing: 31.10.2004
(51) Int. Cl.: B64G 1/00, B64G 5/00, F41F 3/04

(54) **PAYLOAD LAUNCHING SYSTEM**
SYSTEM ZUM STARTEN EINER NUTZLAST
SYSTEME DE LANCEMENT DE CHARGE UTILE

(30) Priority: 31.10.2003 GB 0325456
(43) Date of publication of application: 12.07.2006
(73) Proprietor: Demole, Frederic Jean-Pierre, London SW7 3DQ (GB)
(72) Inventor: Demole, Frederic Jean-Pierre, London SW7 3DQ (GB)
(74) Representative: Prentice, Raymond Roy
(86) International application number: PCT/EP2004/012346
(87) International publication number: WO 2005/049425

(56) References cited:
- WO-A-01/62594
- US-A- 3 088 698
- US-A- 3 363 508
- BOLONKIN A: "Non-Rocket Missile Rope Launcher" 53RD INTERNATIONAL ASTRONAUTICAL CONGRESS, 10 October 2002 (2002-10-10), XP008044921 HOUSTON, TX, USA
- PATENT ABSTRACTS OF JAPAN vol. 016, no. 498 (M-1325), 15 October 1992 (1992-10-15) & JP 04 183700 A (MITSUBISHI HEAVY IND LTD), 30 June 1992 (1992-06-30)

## Description

This invention relates to a payload launching system for accelerating a rocket, carrying or not carrying a payload, particularly but not exclusively, in order to reduce launch costs.

In WO 0162594, which shows all the features of the preambles of claims 1 and 2, there is described an acceleration system comprising a flywheel, able to rotate on an axis, and a cable, an end portion of which is adapted to releasably couping with a load, and a remote end portion of which can be engaged with the rotating flywheel.
The flywheel is provided with a surface for receiving a portion of the cable remote from the said end portion and the surface has a curved profile the radial dimension of which increases progressively from the said axis in an arcuate direction of the said axis. After the remote end portion of the cable is engaged with the flywheel, the remote end portion of the cable remains then restrained near the centre of the flywheel and the cable winds up along the curved profile, accelerating the load.
The acceleration system provides a good solution for accelerating a heavy load with a uniform acceleration and may be used for accelerating an aircraft to take-off speed.

The acceleration system, however, describes no practical way to accelerate a rocket that may be attached to the cable, considering that the top part of the rocket usually comprises a conical shroud of rather light construction and sometimes a payload such as a remote sensing satellite.

An objective of the payload launching system is to accelerate a rocket.

According to the present invention there is provided a launching system including all the features of independent claims 1 and 2.

There is provided a payload launching system comprising a cable, an end portion of which is adapted for releasably couping with a rocket, a rotary member adapted for rotation on an axis and drive means for disengageably engaging with the rotary member so as to rotate the rotary member on the axis characterised in that the rotary member is provided with a surface for receiving a portion of the cable remote from the said end portion and the surface has a curved profile the radial dimension of which increases progressively from the said axis in an arcuate direction of the said axis. Means for engaging the said remote end portion of the cable with the rotary member, while it is rotating, is also provided. The system also comprises a number of transferring means at the remote end portion of the cable, that transfer the pulling force of the cable to the rocket at structurally appropriate locations on the rocket during the acceleration. Following is a description, by way of example only and with reference to the accompanying drawings, of one method of carrying the invention into effect.

In the drawings :
Figure 1 is a diagrammatic perspective view demonstrating the preferred embodiment of a payload launching system at the very beginning of the acceleration.
Figure 2 is a diagrammatic perspective view demonstrating the preferred embodiment of a payload launching system at the end of the acceleration.
Figure 3 is a diagrammatic perspective view demonstrating the preferred embodiment of a payload launching system a short moment after the acceleration.
Figure 4 is a diagrammatic perspective view demonstrating another embodiment of a payload launching system at the very beginning of the acceleration.
Figure 5 is a diagrammatic perspective view demonstrating the rotary member at the very beginning of the acceleration.
Figure 6 is a diagrammatic perspective view demonstrating the rotary member at the end of the acceleration.
Figure 7 is a diagrammatic perspective view of the rocket and of the transferring means during the acceleration.
Figure 8 is a diagrammatic perspective view of the internal structure of the rocket and of the transferring means during the acceleration.

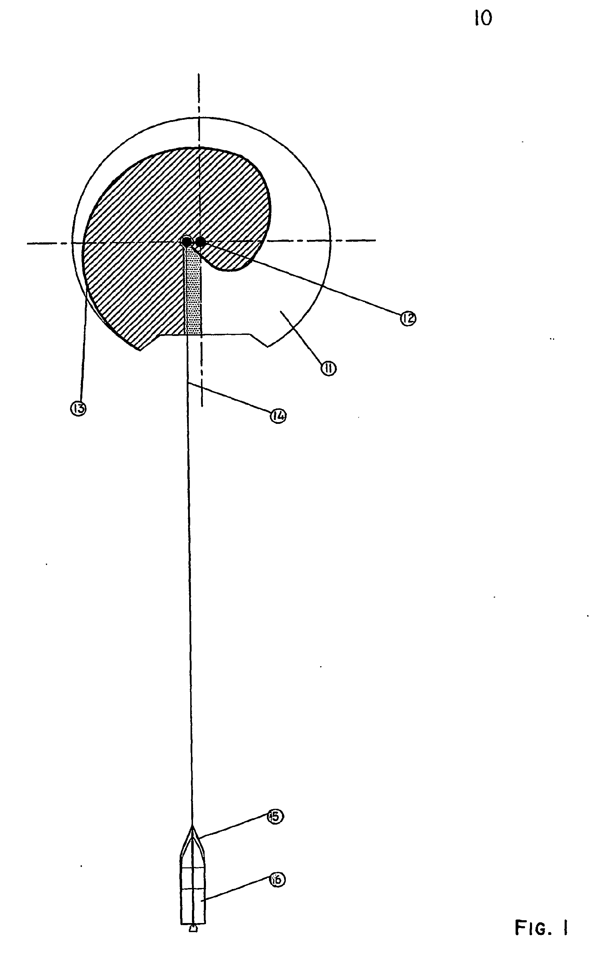

Referring now to Figure 1, Figure 2 and Figure 3 of the drawings, which are diagrammatic conceptual representations, there is described an embodiment of a payload launching system (10) comprising a wheel (11) rotatably mounted on an axis (12) and driven, so as to rotate on the axis (12), by means of a power source (not shown) acting on the wheel (11). The wheel (11) is provided with a surface (13) for receiving the cable (14). The surface (13), when viewed axially of the axis (12), is of a curved formation the profile of which extending longitudinally of the surface (13) and in a radial direction from the axis (12) increases progressively from the axis (12) in an arcuate direction of the axis (12).
A number of transferring means (15) are provided at the other end of the cable (14). The transferring means (15) are so designed that they transfer the pulling force from the cable to the rocket (16) at appropriate locations on the structure of the rocket during the acceleration.

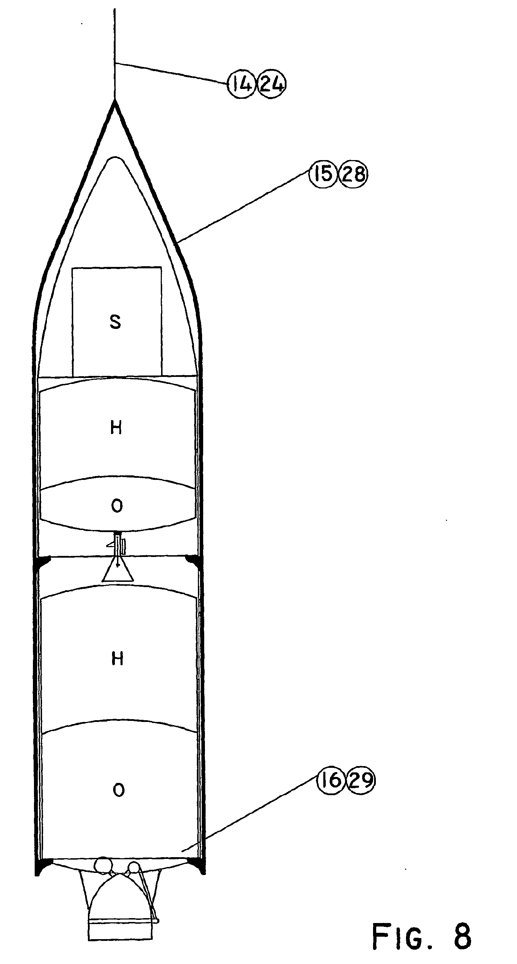

Figure 8 shows an example of the design of transferring means and of the locations on the rocket structure where they are able to transfer the pulling force of the cable to the rocket. Means (not shown) is provided for pushing an end portion of the cable (14) towards the wheel (11), in an axial direction of the wheel (11), so that the distal end of the cable (14) remote from the rocket (16) is restrained near the centre of the wheel (11) and the end portion of the cable (14) locates on the profiled surface (13).
In a starting position, an end portion of the cable (14) is held away from the profiled surface (13) of the wheel (11). The power source is then operated so as to rotate the wheel (11). When the rotational energy is sufficient to provide power to accelerate the transferring means (15) and the rocket (16), then the said means is operated to push the distal end of the cable (14) towards the wheel (11) so that the distal end of the cable (14) remote from the rocket (16) is restrained near the centre of the wheel (11) and the end portion of the cable (14) locates on the profiled surface (13). The effect of the profile of the surface (13) is such that the cable (14) draws the transferring means (15) and the rocket (16) in a direction towards the wheel (11), initially at low speed and then at progressively increasing speed as the radial distance of the profile of the surface (13) from the axis (12) increases.

Referring now to Figure 4 of the drawings, which is a diagrammatic conceptual representation, there is shown an embodiment of a payload launching system (20) in accordance with the present invention for accelerating a rocket. The system comprises a wheel (21) rotatably mounted on an axis (22) and driven, so as to rotate on the axis (22), by means of a power source acting on the wheel (21). The wheel (21) is provided with a surface (23) for receiving a cable (24). The surface (23), when viewed axially of the axis (22), is of a curved formation the profile of which extending longitudinally of the surface (23) and in a radial direction from the axis (22) increases progressively from the axis (22) in an arcuate direction of the axis (22). The other end portion of cable (24) is turned on an additional rotary member (25), which is adapted for rotation on a second axis (26). A second cable (27) is attached to one of its end portion to the additional rotary member (25) and is connected on its other end portion to the rocket (29). Means (not shown) is provided for pushing an end portion of the cable (24) towards the wheel (21), in an axial direction of the wheel (21).
In a starting position, an end portion of the cable (27) remote from the additional rotary member (25) is connected to the transferring means (28), while the distal end of the cable (24) is held away from the profiled surface (23) of the wheel (21). The power source is then operated so as to rotate the wheel (21). When the rotational energy is sufficient to provide power to accelerate the transferring means (28) and the rocket (29), then the said means is operated to push the distal end of the cable (24) towards the wheel (21) so that the end portion of the cable (24) remote from the additional rotary member (25) is restrained at the centre of the wheel (21) and the distal end of the cable (24) locates on the profiled surface (23). The arrangement is such that the additional rotary member (25) is of a lighter construction than the wheel (21) and may be arranged such as to accomodate the length of the cable (27) more easily than the profiled surface (23).

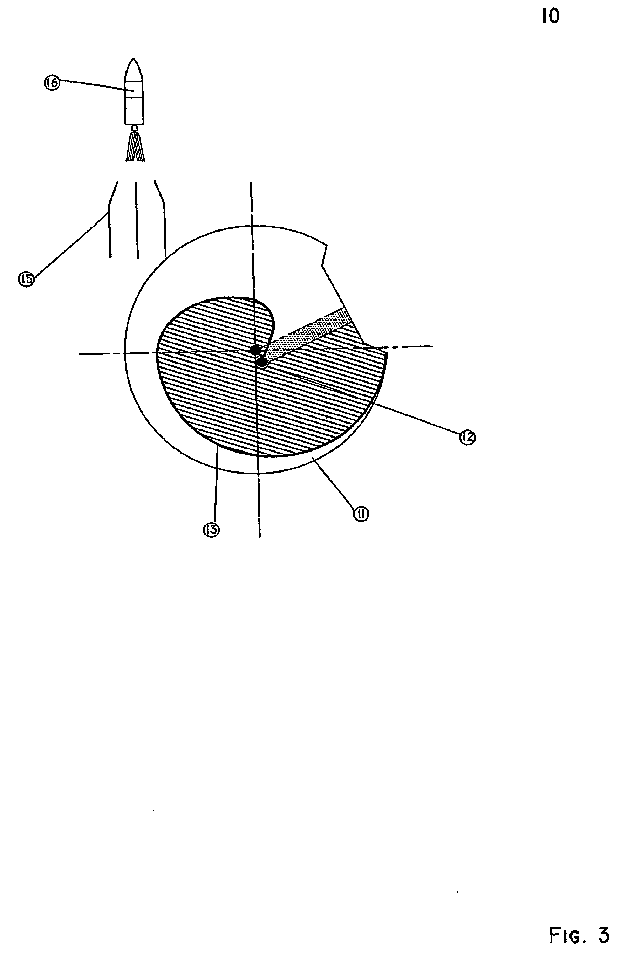

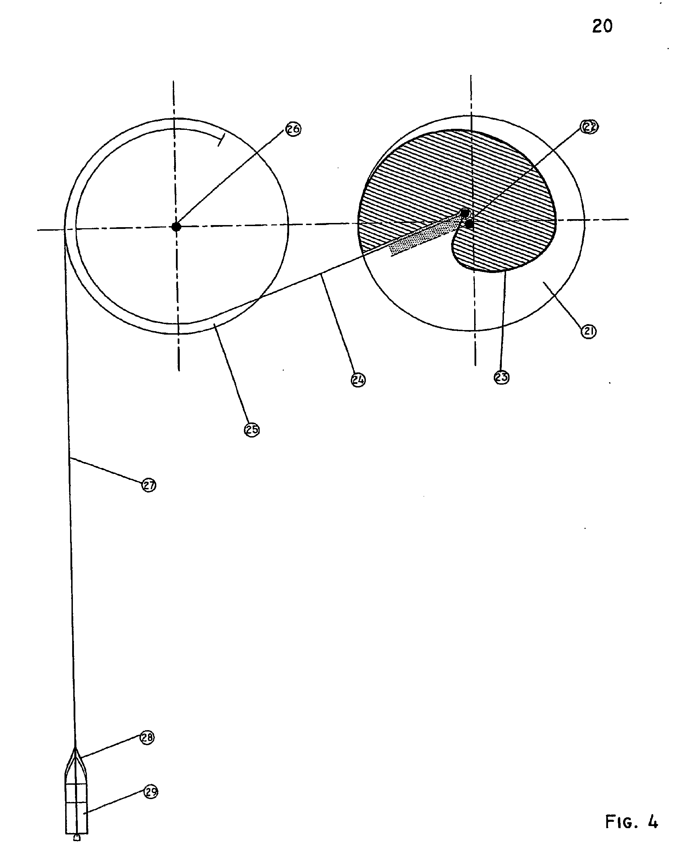

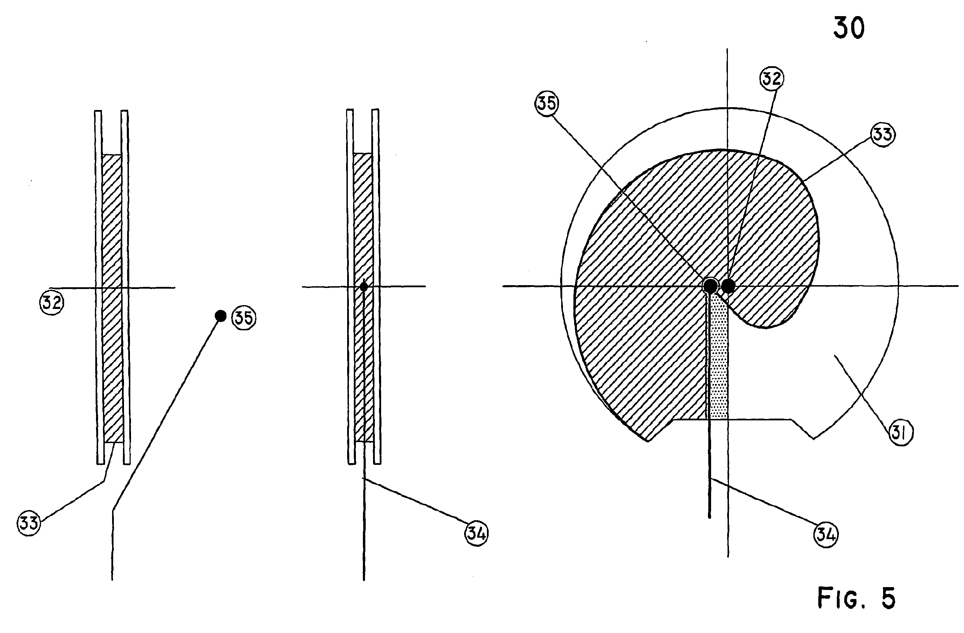

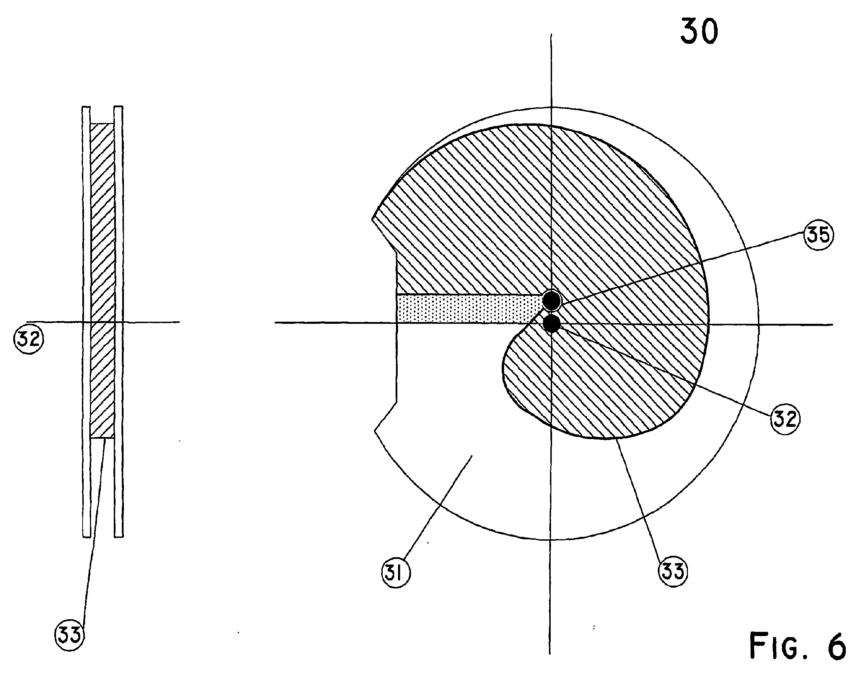

Referring now to Figure 5 and Figure 6 of the drawings, which are diagrammatic conceptual representations, there is shown a system (30) which operates in accordance with the principle described with reference to Figure 1, Figure 2 and Figure 3 of the drawings. The power source, the rocket and the transferring means are not shown.
The distal end of the cable (33) is provided with a ball (35). The cable (34) is held up to now away from the wheel (31), rotating on the axis (32), and is now pushed by the said engaging means in an axial direction towards the wheel (31) so as to locate the ball (35) in the space provided in the wheel (31), located adjacent a centre of the wheel (31). The ball (35) is now restrained with the rotating wheel (31) and pulls the cable (34) with it.

As the wheel (31) continues its rotation, the cable (34) locates on the curved profiled surface (33), accelerating the rocket.

In Figure 6, the rotating wheel (31) is now in an end position of the operation of the payload launching system; the wheel (31) has completed about one and a quarter of a full rotation and the cable (34) is wound up on the curved profiled surface (33) and the acceleration is complete.

The rocket then continues its trajectory, and the wheel (31) continues its rotation with its remaining rotational energy.

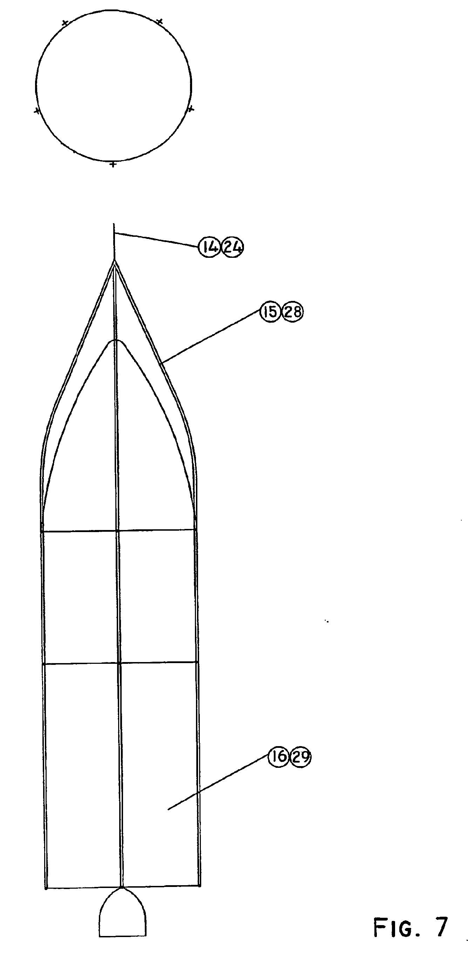

Figure 7 is a diagrammatic perspective view of the rocket (16,29) and of the transferring means (15,28) attached to the cable (14,24) during the acceleration.

Referring now to Figure 8 of the drawings, there is shown a view of a traditionally designed rocket comprising, in this particular example, two stages and, in this particular example, two engines functioning with liquid oxygen and liquid hydrogen; a first stage, comprising a first stage engine, a fuel tank containing liquid hydrogen (H), a fuel tank containing liquid oxygen (O), and a second stage, comprising a second stage engine, a fuel tank containing liquid hydrogen (H), a fuel tank containing liquid oxygen (O).
The rocket also comprises a payload such as a remote sensing satellite and a conical shroud on top, enclosing and protecting the payload and providing good aerodynamic characteristics to the rocket. Two of a number of transferring means are shown transferring the pulling force from the cable to the rocket at points located, in this particular example, after the first stage and after the second stage of the rocket.

### Advantage of the payload launching system :

The transferring means are able to transfer the pulling force of the cable to the rocket at appropriate locations on the structure of the rocket. Any type of rocket may be used with the payload launching system but it is possible, particularly, to use a traditionally designed rocket. This traditional design, shown on Figure 8, is the most efficient for most applications. The transferring means transfer the pulling force of the cable to the rocket after the front part of the rocket.
The rocket begins its trajectory with a significant speed. Because a significant energy is imparted to the rocket at the beginning of the launch, a smaller rocket can be used, carrying less fuel, powered by a smaller size first stage engine. This leads to a more simple and more efficient design of the rocket, and allows, for example, to choose those fuels that have the highest specific impulse and that are more expensive to produce, since they are used in a smaller quantity. All this leads to a more efficient operation and considerably lower costs.

### Disadvantages of the payload launching system :

The conical shroud on top of the rocket and the structure of the rocket sustain higher loads because of the significant speed in the lower, denser layers of the atmosphere.
The conical shroud and the rocket, however, because of their respective geometric structures, can be reinforced efficiently.

In various preferred embodiment of the payload launching system :

A particular embodiment of the payload launching system may also include means for disconnecting the cable (14, 24) from the transferring means (15,28). In another particular embodiment of the payload launching system, these means include an explosive device.

A particular embodiment of the payload launching system may also include detecting means for detecting the passage of the rocket at some chosen point and operate the means for disconnecting the cable (14, 24) from the transferring means (15,28). These detecting means may be located on the system or on the ground.

A well may be used with the payload launching system; the wheel would be at the top of the well and the rocket in a starting position near the bottom of the well. Or the wheel may be on the top of a structure and the rocket in a starting position on the ground or at the bottom of a well located below the structure.

A structure laying in a volume of liquid, such as water, and providing enough space for the rocket to move inside it during the acceleration may be used with the payload launching system. This structure may be positioned at the most appropriate location and latitude.

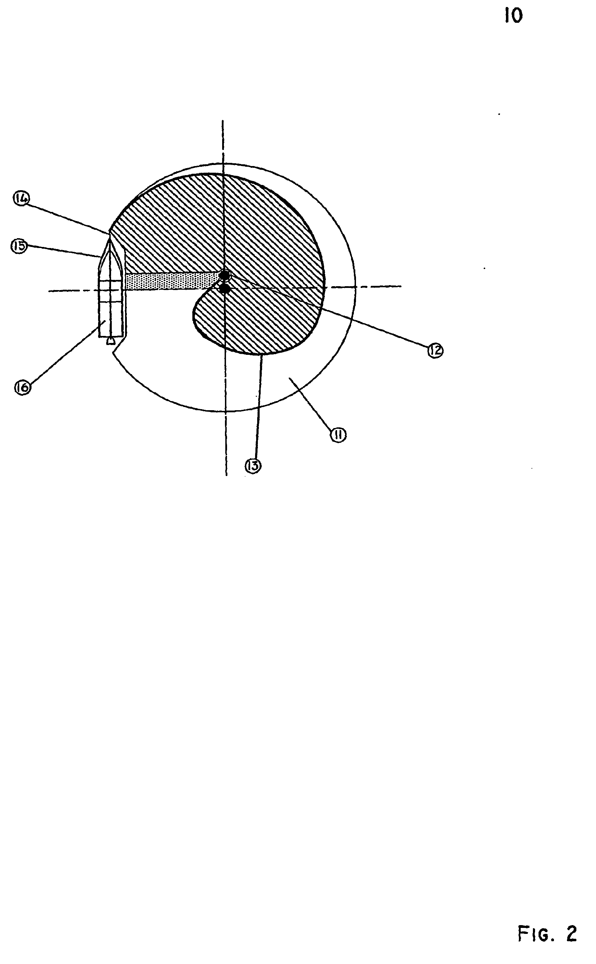

In one particular embodiment of the payload launching system, the transferring means do not continue with the rocket; the rocket continues its trajectory on its own as shown on Figure 3.

In one embodiment, the transferring means are designed so that they move away from the rocket some time after the acceleration.

In another embodiment, the transferring means are attached with the rocket at some points of the rocket, and means for detaching the transferring means is provided.

In another embodiment, the means for detaching the transferring means from the rocket include an explosive device.

A particular embodiment of the payload launching system may also include detecting means for detecting the passage of the rocket at some chosen point and operate the means for detaching the transferring means from the rocket. These detecting means may be located on the system or on the ground.

An aerodynamic structure may be provided on a transferring means in order to pull a transferring means away from the rocket. The flow of air caused by the movement of the rocket during or after the acceleration creates an aerodynamic force on the aerodynamic structure that pulls the transferring means away from the rocket.

In a particular embodiment, a transferring means may be designed so as to contain the external structure of the rocket near a fuel tank, so that the structure of the rocket at this point does not substantially increase because of the lateral pressure induced by the acceleration.

A net laid close to the ground or a parachute on a transferring means may be used to recover a transferring means after acceleration.

An empty space may be provided below the rocket in order to allow the exhaust gases to accumulate in this space when firing the first stage engine while the rocket is at the very beginning of the acceleration.

Means for keeping the rocket in place at the very beginning of the acceleration when the first stage engine is fired may be provided.

External storage fuel tanks may be provided near a particular embodiment of the payload launching system for ease of operation.

A particular example of means for engaging an end portion of the cable with the rotating wheel is a human operator who pushes that end portion towards the wheel.

A clutch may be provided between the drive means and the wheel.

It is not necessary in principle to ignite the first stage engine at the beginning of the acceleration; the first stage engine may be ignited at any time during the acceleration or after the acceleration.

In a particular embodiment of the payload launching system, as shown on Figure 5 and Figure 6, a ball at the end of the cable restrains the cable at a centre of the wheel; in another embodiment of a payload launching system, the end of the cable is shaped so as to be restrained by a number of spaced protrusions located adjacent a centre of the wheel.

In a particular embodiment of the payload launching system, means for extracting the cable from the flywheel, while the flywheel is rotating, is provided. These means allow, particularly but not exclusively, to have the cable and the flywheel ready for another operation quickly.

Definitions : The term cable includes a chain. A chain may be used in place of a cable.

The term rocket includes any structure powered by a reaction engine. The said structure may include a fin, a wing, a rudder, a manned or unmanned cockpit, a wheel or a ski for landing, or any combination thereof; the term reaction engine includes any engine using chemical fuel, or chemical fuel with air, and expells it away from the engine in order to provide thrust. The term reaction engine also includes any engine expelling any material away from it by use of electricity or nuclear energy.

The term payload includes any guidance system for guiding the rocket on its trajectory, any electronic system for sensing or communicating or photographing, or any system to be released in space such as an artificial satellite.

The expression "the front part of a rocket" means that part of a rocket that is at the front of a rocket respective to the direction of movement of a rocket.
The expression "after the front part of a rocket" means that point of a rocket that is located after the front part of a rocket respective to the direction of movement of a rocket. That is, there is, respective to the direction of movement of the rocket, first the front part, then the part after the front part, then the back part of the rocket.
The expression "a location after the first stage" means that part of the first stage that is the most distant from the front part of the rocket.
The expression "a location after the second stage" means that part of the second stage that is the most distant from the front part of the rocket.

### Remark :

In the particular embodiments of the payload launching system discussed and shown on all of the drawings, the structurally appropriate points where the transferring means transfer the pulling force from the cable to the rocket are located after the front part of the rocket.
That is, the transferring means transfer the pulling force from the cable to the rocket at points on the rocket located after the front part of the rocket.
In these particular embodiments, the transferring means are rigid metallic structures extending from the end of the cable to the back of the rocket. They are so shaped that they do not interfere with the front part of the rocket, as shown on Figure 7 and Figure 8. At the points where they transfer the pulling force to the rocket, these metallic structure are so shaped that they comprise an extension on their structure that lies immediately below that part of the rocket that sustains this pulling force. In these example, these transferring means are not attached to the rocket. The said extensions are so shaped that they have the form of a hook and they are restrained to the rocket for as long as the pulling force from the cable is transferred to the rocket due to their particular shape. In these particular embodiments, shown on all drawings, the rocket is accelerated vertically and the transferring means fall away from the rocket as soon as the transfer of the pulling force from the cable to the rocket ceases.

## Claims

1. A payload launching system comprising a cable (14), an end portion of which is adapted for releasably coupling with a rocket (16), a rotary member (11) adapted for rotation on an axis (12) and drive means for disengageably engaging with the rotary member (11) so as to rotate the rotary member (11) on the axis (12), and the rotary member (11) is provided with a surface (13) for receiving a portion of the cable (14) remote from a rocket (16), and the surface (13) has a curved profile, the radial dimension of which increases progressively from the said axis (12) in an arcuate direction of the said axis (12), and means for engaging a portion of the said cable (14) remote from a rocket (16) with the rotary member (11), while the said rotary member is rotating, so that the portion of the said cable (14) remote from a rocket (16) locates on the said surface (13), while an end portion of the said cable (14) remote from a rocket (16) is restrained at a location on the rotary member (11) adjacent to a centre of the rotary member (11), **characterised in that** there is provided a rocket (16) and there is provided transferring means (15), between the cable (14) and a rocket (16), said transferring means (15) being adapted to transfer the pulling force of the cable (14) to the rocket (16), and the pulling force of the cable (14) is applied to the rocket (16) at multiple points, and the said transferring means (15) transfer the said pulling force to the rocket (16) at points located on the rocket (16) away from that particular point that is located on the rocket (16) the most at the front of the front part of the rocket (16), and at least one of the said transferring means (15) transfers the said pulling force to the rocket (16) at a point located on the rocket (16) away from the base of the rocket (16).

2. A payload launching system comprising a cable (27), an end portion of which is adapted for releasably coupling with a rocket (29), a rotary member (21) adapted for rotation on an axis (22) and drive means for disengageably engaging with the rotary member (21) so as to rotate the rotary member (21) on the axis (22), and an additional rotary member (25) adapted for rotation on a second axis (26), and an end portion of the said cable (27) remote from the rocket (29) is attached to the additional rotary member (25), and a second cable (24), an end portion of which is attached to the additional rotary member (25), and the rotary member (21) is provided with a surface (23) for receiving a portion of the said cable (24) remote from the additional rotary member (25), and the surface (23) has a curved profile, the radial dimension of which increases progressively from the said axis (22) in an arcuate direction of the said axis (22), and means for engaging a portion of the said cable (24) remote from the said additional rotary member (25) with the said rotary member (21),while the said rotary member (21) is rotating, so that the portion of the said cable (24) remote from the said additional rotary member (25) locates on the said surface (23) while the end portion of the said cable (24) remote from the additional rotary member (25) is restrained at a location on the rotary member (21) adjacent to a centre of the rotary member (21), **characterised in that** there is provided a rocket (29) and there is provided transferring means (28), between the cable (27) and the rocket (29), said transferring means (28) being adapted to transfer the pulling force of the cable (27) to the rocket (29), and the pulling force of the cable (27) is applied to the rocket (29) at multiple points, and the said transferring means (28) transfer the said pulling force to the rocket (29) at points located on the rocket (29) away from that particular point that is located on the rocket (29) the most at the front of the front part of the rocket (29), and at least one of the said transferring means (28) transfers the said pulling force to the rocket (29) at a point located on the rocket (29) away from the base of the rocket (29).

3. A payload launching system as described in any of the preceding claims, **characterised in that** the transferring means (15,28) are adapted to transfer the pulling force from the cable (14,27) to the rocket (16,29) at at least a point located after the first stage of the rocket (16,29).

4. A payload launching system as described in any of the preceding claims, **characterised in that** the transferring means (15,28) are adapted to transfer the pulling force from the cable (14,27) to the rocket (16,29) at at least a point located after the second stage of the rocket (16, 29).

5. A payload launching system as described in any of the preceding claims, **characterised in that** the transferring means (15,28) are adapted to transfer the pulling force from the cable (14,27) to the rocket (16,29) at at least a point located after a payload carried by the rocket (16, 29).

6. A payload launching system as described in any of the preceding claims, **characterised in that** there is provided means for disconnecting the cable (14,27) from said transferring means (15,28).

7. A payload launching system as described in any of the preceding claims, **characterised in that** the means for disconnecting the cable (14,27) include an explosive device.

8. A payload launching system as described in any of the preceding claims, **characterised in that** the rocket (16,29) comprises at least a point on its structure where said transferring means (15,28) is able to transfer the pulling force from the cable (14,27) to the rocket (16,29).

9. A payload launching system as described in any of the preceding claims, **characterised in that** the rocket (16,29) comprises points on its structure where said transferring means is attached to the rocket (16,29).

10. A payload launching system as described in any of the preceding claims, **characterised in that** there is provided means for detaching said transferring means.

11. A payload launching system as described in any of the preceding claims, **characterised in that** the means for detaching a transferring means (15,28) from the rocket (16,29) include an explosive device.

12. A payload launching system as described in any of the preceding claims, **characterised in that** there is provided means for moving said transferring means (15,28) away from the rocket (16,29) so that the rocket (16,29) is able to continue its trajectory unobstructed by it.

13. A payload launching system as described in claim 12, **characterised in that** the means for moving a transferring means (15,28) include an aerodynamic structure located on said transferring means (15,28).

## Patentansprüche

1. Nutzlast-Abschusssystem mit einem Kabel (14), bei dem ein Endabschnitt zum lösbaren Ankoppeln an eine Rakete (16) ausgebildet ist, einem Drehelement (11), das zum Drehen auf einer Achse (12) ausgebildet ist, und einer Antriebseinrichtung zum auslösbaren Verbinden mit dem Drehelement (11), um das Drehelement (11) auf der Achse (12) in Drehung zu versetzen, wobei das Drehelement (11) mit einer Oberfläche (13) zum Aufnehmen eines von der Rakete (16) entfernten Bereichs des Kabels (14) versehen ist und die Oberfläche (13) ein gekrümmtes Profil hat, dessen radiale Abmessung von der Achse (12) in einer bogenförmigen Richtung zur Achse (12) progressiv zunimmt, und einer Einrichtung zum Verbinden eines von einer Rakete (16) entfernten Bereichs des Kabels (14) mit dem Drehelement (11), während sich das Drehelement dreht, so dass der von einer Rakete (16) entfernte Bereich des Kabels (14) auf der Oberfläche (13) liegt, während ein von einer Rakete (16) entfernter Endabschnitt des Kabels (14) an einer Stelle auf dem Drehelement (11) angrenzend an einen Mittelpunkt des Drehelements (11) gehalten wird, **dadurch gekennzeichnet, dass** eine Rakete (16) bereit gestellt wird und Übertragungselemente (15) zwischen dem Kabel (14) und einer Rakete (16) bereit gestellt werden, wobei die Übertragungselemente (15) so ausgebildet snd, dass diese die Zugkraft des Kabels (14) auf die Rakete (16) übertragen und die Zugkraft des Kabels (14) auf die Rakete (16) an mehreren Punkten beaufschlagt wird, und die Übertragungselemente (15) die Zugkraft auf die Rakete (16) an Punkten übertrage, die auf der Rakete (16) fern von dem speziellen Punkt liegen, der auf der Rakete (16) ganz vorne am Vorderteil der Rakete (16) liegt, und wenigstens eines der Übertragungselemente (15) die Zugkraft auf die Rakete (16) an einem Punkt überträgt, der auf der Rakete (16) fern von der Basis der Rakete (16) liegt.

2. Nutzlast-Abschusssystem mit einem Kabel (27), bei dem ein Endabschnitt zum lösbaren Verbinden mit einer Rakete (29) ausgebildet ist, einem Drehelement (21), das für eine Drehung auf einer Achse (22) ausgebildet ist, und eine Antriebseinrichtung zum auslösbaren Verbinden mit dem Drehelement (21), um das Drehelement (21) auf der Achse (22) in Drehung zu versetzen, und einem zusätzlichen Drehelement (25), das zur Drehung auf einer zweiten Achse (26) ausgebildet ist, wobei ein von der Rakete (29) entfernter Endabschnitt des Kabels (27) an dem zusätzlichen Drehelement (25) angebracht ist, und einem zweiten Kabel (24), bei dem ein Endabschnitt an dem zusätzlichen Drehelement (25) angebracht ist, wobei das Drehelement (21) mit einer Oberfläche (23) zum Aufnehmen eines von dem zusätzlichen Drehelement (25) entfernt liegenden Bereichs des Kabels (24) versehen ist, wobei die Oberfläche (23) ein gekrümmtes Profil hat, dessen radiale Abmessung von der Achse (22) in einer bogenförmigen Richtung zur Achse (22) progressiv zunimmt, und einer Einrichtung zum Verbinden eines von dem zusätzlichen Drehelement (25) entfernt liegenden Bereichs des Kabels (24) mit dem Drehelement (21), während sich das Drehelement (21) dreht, so dass der von dem zusätzlichen Drehelement (25) entfernt liegende Bereich des Kabels (24) auf der Oberfläche (23) liegt, während der von dem zusätzlichen Drehelement (25) entfernt liegende Endabschnitt des Kabels (24) an einer Stelle auf dem Drehelement (21) angrenzend an einen Mittelpunkt des Drehelements (21) gehalten wird, **dadurch gekennzeichnet, dass** eine Rakete (29) vorgesehen ist und Übertragungselemente (28) zwischen dem Kabel (27) und der Rakete (29) vorgesehen sind, wobei die Übertragungselemente (28) so ausgebildet sind, dass diese die Zugkraft des Kabels (27) auf die Rakete (29) übertragen, und die Zugkraft des Kabels (27) auf die Rakete (29) an mehreren Punkten beaufschlagt wird, wobei die Übertragungselemente (28) die Zugkraft auf die Rakete (29) an Punkten übertragen, die auf der Rakete (29) fern von dem speziellen Punkt liegen, der auf der Rakete (29) ganz vorne an der Vorderseite der Rakete (29) liegt, und wenigstens eines der Übertragungselemente (28) die Zugkraft auf die Rakete (29) an einem Punkt überträgt, der auf der Rakete (29) fern von der Basis der Rakete (29) liegt.

3. Nutzlast-Abschusssystem nach einem der vorstehenden Ansprüche, **dadurch gekennzeichnet, dass** die Übertragungselemente (15, 28) so ausgebildet sind, dass diese Zugkraft von dem Kabel (14, 27) auf die Rakete (16, 29) an wenigstens einem Punkt überträgt, der hinter der ersten Stufe der Rakete (16, 29) liegt.

4. Nutzlast-Abschusssystem nach einem der vorstehenden Ansprüche, **dadurch gekennzeichnet, dass** die Übertragungselemente (15, 28) so ausgebildet sind, dass diese die Zugkraft von dem Kabel (14, 27) auf die Rakete (16, 29) an wenigstens einem Punkt überträgt, der hinter der zweiten Stufe der Rakete (16, 29) liegt.

5. Nutzlast-Abschusssystem nach einem der vorstehenden Ansprüche, **dadurch gekennzeichnet, dass** die Übertragungselemente (15, 28) so ausgebildet sind, dass diese die Zugkraft von dem Kabel (14, 27) auf die Rakete (16, 29) an wenigstens einem Punkt überträgt, der hinter der durch die Rakete (16, 29) beförderten Nutzlast liegt.

6. Nutzlast-Abschusssystem nach einem der vorstehenden Ansprüche, **dadurch gekennzeichnet, dass** eine Einrichtung zum Abtrennen des Kabels (14, 27) von den Übertragungselementen (15, 28) vorgesehen ist.

7. Nutzlast-Abschusssystem nach einem der vorstehenden Ansprüche, **dadurch gekennzeichnet, dass** die Einrichtung zum Abtrennen des Kabels (14, 27) eine Explosionseinrichtung umfasst.

8. Nutzlast-Abschusssystem nach einem der vorstehenden Ansprüche, **dadurch gekennzeichnet, dass** die Rakete (16, 29) wenigstens einen Punkt auf ihrer Struktur umfasst, an welchem die Übertragungselemente (15, 28) die Zugkraft von dem Kabel (14, 27) auf die Rakete (16, 29) übertragen können.

9. Nutzlast-Abschusssystem nach einem der vorstehenden Ansprüche, **dadurch gekennzeichnet, dass** die Rakete (16, 29) Punkte auf ihrer Struktur umfasst, an welchen die Übertragungselemente an der Rakete (16, 29) angebracht sind.

10. Nutzlast-Abschusssystem nach einem der vorstehenden Ansprüche, **dadurch gekennzeichnet, dass** eine Einrichtung zum Ablösen der Übertragungselemente vorgesehen ist.

11. Nutzlast-Abschusssystem nach einem der vorstehenden Ansprüche, **dadurch gekennzeichnet, dass** die Einrichtung zum Ablösen von Übertragungselementen (15, 28) von der Rakete (16, 29) eine Explosionseinrichtung umfasst.

12. Nutzlast-Abschusssystem nach einem der vorstehenden Ansprüche, **dadurch gekennzeichnet, dass** eine Einrichtung zum Bewegen der Übertragungselemente (15, 28) weg von der Rakete (16, 29) vorgesehen ist, so dass die Rakete (16, 29) ihre Flugbahn von diesen ungestört fortsetzen kann.

13. Nutzlast-Abschusssystem nach Anspruch 12, **dadurch gekennzeichnet, dass** die Einrichtung zum Bewegen von Übertragungselementen (15, 28) eine aerodynamische Struktur umfasst, die auf den Übertragungselementen (15, 28) angeordnet ist.

## Revendications

1. Système de lancement à charge utile comprenant un câble (14), une portion d'extrémité duquel est adaptée pour se coupler de façon libérable avec une fusée (16), un élément rotatoire ou pivotant (11) adapté pour tourner ou pivoter autour d'un axe (12) et un moyen d'entraînement pour s'engager de façon amovible avec l'élément pivotant (11) pour faire pivoter l'élément pivotant (11) autour de l'axe (12) et l'élément pivotant (11) est prévu avec une surface (13) destinée à recevoir une portion du câble (14) distant d'une fusée (16), et la surface (13) possède un profil incurvé, la dimension radiale duquel augmente progressivement à partir dudit axe (12) dans une direction arquée dudit axe (12), et un moyen pour engager une portion dudit câble (14) distant d'une fusée (16) avec l'élément pivotant (11), pendant que ledit élément pivotant pivote, de sorte que la portion dudit câble (14) distant d'une fusée (16) se situe sur ladite surface (13), pendant qu'une portion d'extrémité dudit câble (14) distant d'une fusée (16) est encastrée ou serrée au niveau d'un emplacement sur l'élément pivotant (11) de façon adjacente au centre de l'élément pivotant (11), **caractérisé en ce qu'**une fusée (16) est fournie et **en ce qu'**un moyen de transfert (15) est fourni, entre le câble (14) et une fusée (16), ledit moyen de transfert (15) étant adapté pour transférer la force de tirage ou de traction du câble (14) à la fusée (16), et la force de tirage du câble (14) est appliquée à la fusée (16) à des points multiples, et lesdits moyens de transfert (15) transfèrent ladite force de tirage à la fusée (16) à des points situés sur la fusée (16) à distance ou de manière éloignée de ce point particulier situé sur la fusée (16) le plus à l'avant de la partie avant de la fusée (16), et au moins un desdits moyens de transfert (15) transfère ladite force de tirage à la fusée (16) à un point situé sur la fusée (16) à distance ou de manière éloignée de la base de la fusée (16).

2. Système de lancement à charge utile comprenant un câble (27), une portion d'extrémité duquel est adaptée pour se coupler de façon libérable avec une fusée (29), un élément rotatoire ou pivotant (21) adapté pour tourner ou pivoter autour d'un axe (22) et un moyen d'entraînement pour s'engager de façon amovible avec l'élément pivotant (21) pour faire pivoter l'élément pivotant (21) autour de l'axe (22), et un élément rotatoire ou pivotant (25) supplémentaire adapté pour pivoter ou tourner autour d'un second axe (26), et une portion d'extrémité dudit câble (27) distant de la fusée (29) est fixée à l'élément pivotant (25) supplémentaire, et un second câble (24), une portion d'extrémité duquel est fixée à l'élément pivotant (25) supplémentaire, et l'élément pivotant (21) est pourvu d'une surface (23) destinée à recevoir une portion du câble (24) distant de l'élément pivotant (25) supplémentaire, et la surface (23) possède un profil incurvé, la dimension radiale duquel augmente progressivement à partir dudit axe (22) dans une direction arquée dudit axe (22), et un moyen pour engager une portion dudit câble (24) distant dudit élément pivotant (25) supplémentaire avec ledit élément pivotant (21), pendant que ledit élément pivotant (21) pivote, de sorte que la portion dudit câble (24) distant dudit élément pivotant (25) supplémentaire se situe sur ladite surface (23), pendant qu'une portion d'extrémité dudit câble (24) distant dudit élément pivotant (25) supplémentaire est encastrée ou serrée au niveau d'un emplacement sur l'élément pivotant (21) de façon adjacente au centre de l'élément pivotant (21), **caractérisé en ce qu'**une fusée (29) est fournie et **en ce qu'**un moyen de transfert (28) est fourni, entre le câble (27) et la fusée (29), ledit moyen de transfert (28) étant adapté pour transférer la force de traction ou de tirage du câble (27) à la fusée (29), et la force de tirage du câble (27) est appliquée à la fusée (29) à des points multiples, et lesdits moyens de transfert (28) transfèrent ladite force de tirage à la fusée (29) à des points situés sur la fusée (29) à distance ou de manière éloignée de ce point particulier situé sur la fusée (29) le plus à l'avant de la partie avant de la fusée (29), et au moins un desdits moyens de transfert (28) transfère ladite force de tirage à la fusée (29) à un point situé sur la fusée (29) à distance ou de manière éloignée de la base de la fusée (29).

3. Système de lancement à charge utile selon l'une quelconque des revendications précédentes, **caractérisé en ce que** les moyens de transfert (15, 28) sont adaptés pour transférer la force de tirage du câble (14, 27) à la fusée (16, 29) à au moins un point situé après le premier étage de la fusée (16, 29).

4. Système de lancement à charge utile selon l'une quelconque des revendications précédentes, **caractérisé en ce que** les moyens de transfert (15, 28) sont adaptés pour transférer la force de tirage du câble (14, 27) à la fusée (16, 29) à au moins un point situé après le second étage de la fusée (16, 29).

5. Système de lancement à charge utile selon l'une quelconque des revendications précédentes, **caractérisé en ce que** les moyens de transfert (15, 28) sont adaptés pour transférer la force de tirage du câble (14, 27) à la fusée (16, 29) à au moins un point situé après une charge utile transportée par la fusée (16, 29).

6. Système de lancement à charge utile selon l'une quelconque des revendications précédentes, **caractérisé en ce qu'**un moyen pour déconnecter le câble (14, 27) dudit moyen de transfert (15, 28) est fourni.

7. Système de lancement à charge utile selon l'une quelconque des revendications précédentes, **caractérisé en ce que** le moyen pour déconnecter le câble (14, 27) inclut un dispositif explosif.

8. Système de lancement à charge utile selon l'une quelconque des revendications précédentes, **caractérisé en ce que** la fusée (16, 29) comprend au moins un point sur sa structure où ledit moyen de transfert (15, 28) peut transférer la force de tirage du câble (14, 27) à la fusée (16, 29).

9. Système de lancement à charge utile selon l'une quelconque des revendications précédentes, **caractérisé en ce que** la fusée (16, 29) comprend des points sur sa structure où ledit moyen de transfert est fixé à la fusée (16, 29).

10. Système de lancement à charge utile selon l'une quelconque des revendications précédentes, **caractérisé en ce qu'**un moyen pour détacher ledit moyen de transfert est fourni.

11. Système de lancement à charge utile selon l'une quelconque des revendications précédentes, **caractérisé en ce que** le moyen pour détacher un moyen de transfert (15, 28) de la fusée (16, 29) inclut un dispositif explosif.

12. Système de lancement à charge utile selon l'une quelconque des revendications précédentes, **caractérisé en ce qu'**un moyen pour éloigner ledit moyen de transfert (15, 28) de la fusée (16, 29) est fourni, de sorte que la fusée (16, 29) peut poursuivre sa trajectoire sans être gênée par celui-ci.

13. Système de lancement à charge utile selon la revendication 12, **caractérisé en ce que** le moyen pour déplacer un moyen de transfert (15, 28) inclut une structure aérodynamique située sur ledit moyen de transfert (15, 28).
